# EUROPÄISCHE PATENTSCHRIFT

(11) **EP 1 236 337 B1**
(45) Veröffentlichungstag und Bekanntmachung des Hinweises auf die Patenterteilung: **23.11.2005**
(21) Anmeldenummer: 00988683.9
(22) Anmeldetag: 06.12.2000
(51) Int. Cl.: H04M 1/725, H04M 1/57

(54) **MOBILTELEFON MIT EINEM MUSIKSPEICHER**
RADIO DEVICE
APPAREIL RADIO

(30) Priorität: 09.12.1999 DE 19959423
(43) Veröffentlichungstag der Anmeldung: 04.09.2002
(73) Patentinhaber: SIEMENS AKTIENGESELLSCHAFT, 80333 München (DE)
(72) Erfinder: EICHINGER, Josef, 85464 Neufinsing (DE); CHARZINSKI, Joachim, 85764 Oberschleissheim (DE)
(86) Internationale Anmeldenummer: PCT/DE2000/004349
(87) Internationale Veröffentlichungsnummer: WO 2001/043298

(56) Entgegenhaltungen:
- EP-A- 1 089 527
- EP-A- 1 104 154
- WO-A-99/43136
- GB-A- 2 268 663
- GB-A- 2 308 775
- US-A- 4 875 229

## Beschreibung

Die Erfindung betrifft ein Funkgerät, insbesondere ein Mobilfunktelefon, ein Schnurlostelefon oder einen tragbaren Computer mit eingebautem Mobilfunktelefon oder mit eingebautem Schnurlostelefon.

Die rasante technische Entwicklung auf den Gebieten der Telekommunikation und der Unterhaltungselektronik hat in den letzten Jahren zu einer Vielzahl tragbarer Kommunikationsgeräte geführt, welche sich im wesentlichen einerseits aus tragbaren Telekommunikationsgeräten, wie beispielsweise Mobilfunktelefonen, und andererseits aus tragbaren Musikwiedergabeeinrichtungen, wie beispielsweise Walkmen, zusammensetzt.

Fortgeschrittene tragbare Musikwiedergabeeinrichtungen, wie beispielsweise sogenannte MP3-Player, verfügen dabei über einen Flash- oder ROM-Speicher, auf dem digitale Musikdaten abgespeichert sind. Diese abgespeicherten Musikdaten sind dabei gemäß dem Komprimierungsverfahren MPEG layer 3 (MP3) komprimiert.

Da gerade in letzter Zeit beide oben beschriebenen Arten von Geräten, also tragbare Telekommunikationsgeräte und tragbare Musikwiedergabegeräte, an Beliebtheit gewinnen, führt ein Benutzer häufig beide Geräte mit sich, wobei er aber immer nur eins der beiden Geräte benützt.

Aus der WO 39/43136 ist bereits ein Mobiltelefon mit einem integrierten Audioabspielgerät bekannt.

Der Erfindung liegt daher die Aufgabe zugrunde, ein Gerät anzugeben, das sowohl zur drahtlosen Kommunikation, als auch zur Wiedergabe von Musik geeignet ist, das einen geringen Komponentenaufwand erfordert, und das für einen Benutzer komfortabel zu bedienen ist.

Diese Aufgabe wird durch die Merkmale des Patentanspruchs 1 gelöst. Vorteilhafte und zweckmäßige Weiterbildungen ergeben sich aus den abhängigen Ansprüchen.

Die Erfindung beruht also auf dem Gedanken, in das Gehäuse eines Funkgerätes einen Musikspeicher aufzunehmen, und zur Wiedergabe der Musik eine Komponente zu verwenden, die auch zur drahtlosen Kommunikation verwendet wird.

Dabei wird die Bedieneinrichtung des Funkgerätes automatisch von einem Musikwiedergabemodus in einen Kommunikationmodus geschaltet, wenn während des Musikwiedergabe ein Ruf eingeht. Im Musikwiedergabemodus ist dabei der Taste ein anderer Steuerbefehl zugeorgnet als im Kommunikationsmodus.

"Musik" steht dabei im Rahmen dieser Anmeldung stellvertretend für sämtliche Audioinformationen, wie Sprache, Töne oder Musik, da die Erfindung im wesentlichen wohl zur Wiedergabe von Musik herangezogen wird.

So kann ein Gerät geschaffen werden, das sowohl zur drahtlosen Kommunikation, als auch zur Wiedergabe von Musik geeignet ist, wobei vorhandene Synergien beider Anwendungen genützt werden. Von Vorteil ist dabei auch, dass Komponenten eingespart werden können, und so ein kostengünstiges, leichtes und kleines Gerät realisiert werden kann.

Eine Weiterbildung der Erfindung sieht vor, dass die Wiedergabe der Musik automatisch gestoppt wird, wenn die in einem Energiespeicher der Stromversorgungseinrichtung des Funkgerätes gespeicherte Energie unter einen Schwellwert fällt.

Durch diese Priorisierung der Telekommunikationsanwenduhg wird erreicht, dass das Gerät beim Musikhören nicht - beispielsweise aus Unachtsamkeit - so weit entladen wird, dass beispielsweise ein Notruf nicht mehr absetzbar ist.

Auch andere Ausgestaltungen der Erfindung ermöglichen eine gegenüber der drahtlosen Kommunikation nachrangige Musikwiedergabe, ohne auf die Vorteile der Integration beider Funktionen - drahtlose Kommunikation und Musikwiedergabe - in einem Gerät verzichten zu müssen.

Die Erfindung wird im Folgenden anhand bevorzugter Ausführungsbeispiele näher beschrieben, zu deren Erläuterung eine Figur dienen soll, die ein vereinfachtes Blockschaltbild eines Funkgerätes zeigt.

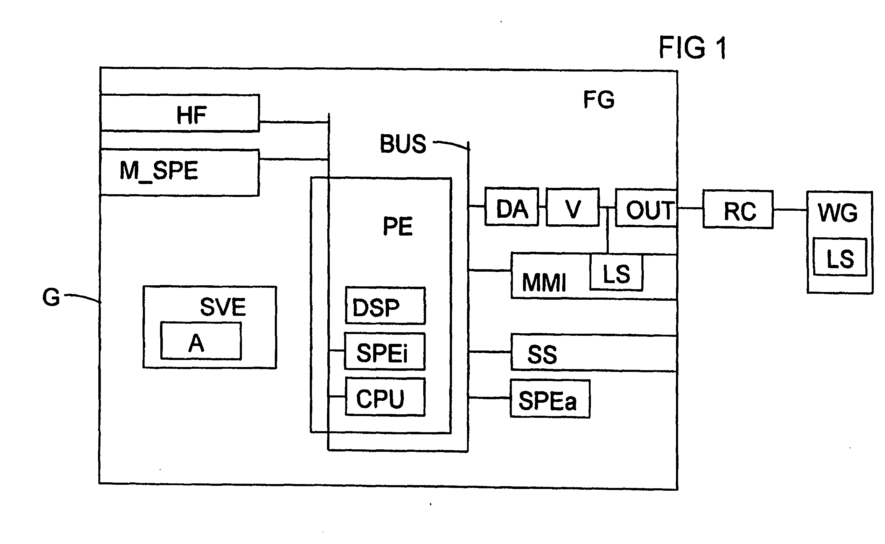

In Figur 1 ist ein Funkgerät FG, wie beispielsweise ein Mobilfunktelefon, dargestellt. Das Gehäuse G des Funkgerätes FG umfasst dabei zur Stromversorgung der Komponenten des Gerätes auch eine Stromversorgungseinrichtung SVE, die im Wesentlichen durch Akkus A realisiert sein kann, und eine Hochfrequenzeinrichtung HF, welche eine Antenneneinrichtung, Verstärkereinrichtungen, eine Oszillatorschaltung, Analog/Digitalwandler, Modulatoren und entsprechende Filter umfassen kann.

Ausserdem enthält das Gehäuse einen Musikspeicher M_SPE, in welchem digitale Musikdaten in komprimierter Form abgespeichert sind. Dabei können die Musikdaten im MP3-Format oder in einem anderen einem Fachmann als solches bekannten Komprimier-Format abgespeichert sein. Bei dem Musikspeicher M_SPE kann es sich um einen Flash- oder ROM-Speicher handeln, welcher auch in Form einer auswechselbaren Speicherkarte realisiert sein kann. Zum Auslesen der Musikdaten kann ein der Speicherkarte entsprechender Kartenleser vorgesehen sein.

Zur Steuerung des Gerätes ist eine programmgesteuerte Prozessoreinrichtung PE, wie beispielsweise ein Mikrocontroller, vorgesehen, die auch einen Prozessor CPU, eine interne Speichereinrichtung SPEi und einen digitalen Signalprozessor DSP umfassen kann. Der digitale Signalprozessor DSP kann bei einer Ausführungsvariante auch außerhalb der Prozessoreinrichtung PE angeordnet sein.

Je nach Ausführungsvariante können dabei innerhalb oder ausserhalb der Prozessoreinrichtung PE weitere - der Prozessoreinrichtung PE zugeordnete, zur Prozessoreinrichtung gehörende, durch die Prozessoreinrichtung gesteuerte, oder die Prozessoreinrichtung steuernde - Komponenten angeordnet sein, deren Funktionen im Zusammenhang mit einer Prozessoreinrichtung einem Fachmann hinreichend bekannt sind, und auf welche daher an dieser Stelle nicht näher eingegangen wird.

Die Komponenten des Gerätes können über ein Bussystem BUS oder Ein-/Ausgabeschnittstellen (nicht dargestellt) und gegebenenfalls geeignete Controller (nicht dargestellt) mit der Prozessoreinrichtung PE Daten austauschen.

Die Prozessoreinrichtung PE steuert dabei die wesentlichen Elemente und Funktionen des Gerätes sowohl bei der drahtlosen Kommunikation, als auch bei der Musikwiedergabe.

Neben der internen Speichereinichtung SPEi kann ausserhalb der Prozessoreinrichtung PE eine externe Speichereinrichtung SPEa vorgesehen sein, welche zumindest teilweise auch durch ein Teilnehmeridentifizierungsmodul realisiert sein kann. Die Speichereinrichtungen können dabei auch Flash-, ROM-, oder RAM-Speicherbausteine umfassen, in welchen die Programmdaten, die zur Steuerung des Gerätes, der drahtlosen Kommunikation und der Musikwiedergabe herangezogen werden, abgelegt sind.

Die Bedieneinrichtung MMI besteht aus einem Lautsprecherelement zur Wiedergabe von Audiosignalen, welche zur Anrufsignalisierung, zur drahtlosen Kommunikation oder zur Musikwiedergabe ausgegeben werden, und einem Mikrofonelement zur Aufnahme von Audiosignalen. Ausserdem ist die Bedieneinrichtung MMI mit einer Tastatur zur Eingabe von Ziffern und Buchstaben und gegebenenfalls Softkeys zur Auswahl von Menüpunkten versehen. Auf einem Display können Menüpunkte, Ziffern, Buchstaben oder andere für den Kommunikationsablauf oder für die Musikwiedergabe relevante Informationen dargestellt werden. Teile der Bedieneinrichtung können auch durch einen Touch-Screen realisiert sein.

Es ist ausserdem eine Schnittstelle SS zum Laden von Musikdaten vorgesehen. Die Musikdaten können dabei entweder aus dem Internet oder von einem PC stammen. Die Schnittstelle kann mittels eines Kabels, als Funkschnittstelle zu einem zellularen Mobilfunksystem (GSM oder UMTS) oder schnurlos gemäß dem Bluetooth- oder dem IrDA Standard realisiert sein. Das Laden der Musikdaten kann durch einen WAP (Wireless Application Protocol)-Browser ausgelöst und unterstützt werden.

Eine Weiterbildung der Erfindung sieht nun vor, dass der digitale Signalprozessor, der bei der drahtlosen Kommunikation zur Datenbearbeitung im Rahmen einer Encodierung oder Decodierung verwendet wird, auch bei der Wiedergabe der Musik verwendet wird. Dabei kann der digitale Signalprozessor DSP die im MP3-Format codierten Daten encodieren.

Eine andere Ausgestaltung der Erfindung sieht vor, dass Digital/Analogwandler DA, die zur Digital/Analogwandlung von Sprachsignalen, die mittels drahtloser Kommunikation zum Funkgerät übertragen werden, vorgesehen sind, auch zur Wiedergabe der Musik verwendet werden. Dabei werden die Musiksignale nach dem Auslesen aus dem Musikspeicher M_SPE und einer entsprechenden Encodierung durch die Digital/Analogwandler in analoge, durch ein Lautsprecherelement wiederzugebende Musiksignale umgesetzt.

Gemäß einer anderen Ausbildung können aber auch eigens an eine Wiedergabe von Musik angepasste Digital/Analogwandler - in der Figur nicht dargestellt - wie beispielsweise Stereo-Digital/Analogwandler verwendet werden.

Gemäß einer weiteren zweckmäßigen Ausführung kann zur Verstärkung der Audiosignale ein Audioverstärker V herangezogen werden, der auch zur Verstärkung von Sprachsignalen, die im Rahmen einer drahtlosen Kommunikation auszugeben sind, verwendet wird.

In einer Ausführungsalternative kann zur Verstärkung der Musiksignale auch ein eigens dafür vorgesehener Audioverstärker - in Figur nicht dargestellt - wie beispielsweise ein HiFi-Stereo-Verstärker verwendet werden.

Bei einer anderen Ausbildung der Erfindung werden sowohl zur Ausgabe von Musiksignalen im Rahmen der Musikwiedergabe als auch zur Ausgabe von Sprache im Rahmen der drahtlosen Kommunikation derselbe Ausgang OUT zum Anschluß einer ein Lautsprecherelement LS umfassenden externen Audiowiedergabeeinrichtung, wie beispielsweise eines Headsets (Hör-Sprechgarnitur) oder eines Kopfhörers verwendet.

Auch hier können alternativ dazu - in der Figur nicht dargestellt -je ein Ausgang zur Ausgabe der Musiksignale und ein Ausgang zur Wiedergabe der Sprachsignale im Rahmen einer drahtlosen Kommunikation vorgesehen sein. Ein im Gehäuse G integriertes Lautsprecherelement LS kann analog zum Anschluß des Ausgangs OUT für eine externe Audioiedergabeeinrichtung realisiert sein.

Die gemeinsame Verwendung von Komponenten zur Musikwiedergabe sowie zur drahtlosen Kommunikation kann durch gesteuerte Schalteinrichtungen zur Umschaltung zwischen dem Musikwiedergabepfad, der seine Quelle im Musikspeicher M_SPE hat, und dem Sprachwiedergabepfad, der seine Quelle in der Hochfrequenzeinrichtung HF hat, realisiert werden.

Schließlich sieht eine Weiterbildung der Erfindung vor, dass die Wiedergabe der Musik automatisch gestoppt wird, wenn die in einem Akku A der Stromversorgungseinrichtung SVE gespeicherte Energie unter einen Schwellwert fällt. Dazu kann kontinuierlich der Ladezustand der Akkus überprüft werden und ein Abschaltsignal generiert werden, sobald ein vorgegebener Schwellwert unterschritten ist. Ausserdem können in Abhängigkeit von diesem Abschaltsignal optische oder akustische Informationen ausgegeben werden, um den Benutzer entsprechend zu informieren.

Gemäß einer weiteren Ausgestaltung wird die Wiedergabe der Musik automatisch unterbrochen oder mit gedämpfter Lautstärke fortgesetzt, sobald der Benutzer des Gerätes angerufen wird, also ein eingehender Ruf signalisiert wird und ein Rufton auszugeben ist. Nach dem Abschalten der Musikwiedergabe bzw. der Verringerung der Lautstärke der Musikwiedergabe kann anstelle der Musik der Rufton oder die Ruftonmelodie ausgegeben werden bzw. die nun leisere Musik mit dem Rufton oder der Ruftonmelodie überlagert werden.

Zur Signalisierung eines eingehenden Rufes sieht eine Ausführungsvariante vor, dass Informationen über die Identität des rufenden Teilnehmers als synthetisierte Sprachsignale an der Audiowiedergabeeinrichtung WG ausgegeben werden. Die Identität des rufenden Teilnehmers kann dabei dadurch bestimmt werden, dass die Rufnummer des rufenden Teilnehmers in Form von Signalisierungsinformationen zum Funkgerät übertragen wird und im Funkgerät durch einen entsprechenden Telefonbucheintrag in den Namen des rufenden Teilnehmers umgesetzt wird, welcher schließlich nach einer entsprechenden Sprachsynthese ausgegeben wird. Dies ermöglicht einem Benutzer des Gerätes eine Entscheidung über die Rufannahme während der Wiedergabe von Musik, ohne auf das Display des Gerätes schauen zu müssen.

Eine weitere Ausbildung der Erfindung sieht vor, dass die Bedieneinrichtung MMI zur Wiedergabe der Musik in einem Musikwiedergabemodus und zur drahtlosen Kommunikation in einem Kommunikationsmodus betreibbar ist. Dabei können beispielsweise in einem Musikwiedergabemodus einer Taste andere Steuerbefehle zugeordnet sein, als in einem Kommunikationsmodus. Ferner kann die Displayanzeige im Musikwiedergabemodus von der Displayanzeige im Kommunikationsmodus unterscheiden. Insbesondere bei der Verwendung von Softkeys oder Touchscreens kann dadurch die Bedienung des Gerätes an den jeweiligen Verwendungszweck angepasst werden. Dabei ist kann die Bedieneinrichtung MMI automatisch vom Musikwiedergabemodus in den Kommunikationsmodus geschaltet wird, wenn während der Musikwiedergabe ein Ruf eingeht, was durch entsprechende Signalisierungsinformationen von einer zugeordneten Basisstation signalisiert wird. Nach Beendigung der drahtlosen Kommunikation oder nach Eingabe einer Ruf-Nichtannahme-Entscheidung kann die Bedieneinrichtung MMI automatisch wieder in den Musikwiedergabemodus geschaltet werden und die Musikwiedergabe fortgesetzt werden.

Schließlich sieht eine Ausführungsvariante der Erfindung vor, dass das Gerät FG über eine Fernbedieneinheit RC bedienbar ist. Die Fernbedieneinheit kann wie die Bedieneinrichtung MMI ein Display, eine Tastatur und Softkeys umfassen und auch als Touchscreen realisiert sein. Die Fernbedieneinheit kann beispielsweise in ein Kabel, welches vom Ausgang OUT für eine externe Audiowiedergabeeinrichtung zur Wiedergabeeinrichtung WG führt, geschaltet sein. Über diese Fernbedieneinheit ist das Gerät sowohl im Musikwiedergabemodus als auch im Kommunikationsmodus bedienbar. Die Umschaltung der Fernbedieneinheit von einem Musikwiedergabemodus in einen Kommunikationsmodus, kann analog zur oben erläuterten Umschaltung der Bedieneinrichtung MMI erfolgen. Die Ansteuerung der Fernbedieneinheit und die Ansteuerung des Funkgerätes durch die Fernbedieneinheit kann durch schnurgebundene Steuerleitungen, welche in obengenanntem Kabel integriert sein können, oder schnurlos durch entsprechende Steuerkanäle erfolgen.

## Patentansprüche

1. Funkgerät (FG) zur drahtlosen Kommunikation,
- mit einem Gehäuse (G), das Komponenten zur Durchführung der drahtlosen Kommunikation enthält, wobei die Komponenten
- eine Stromversorgungseinrichtung (SVE),
- eine Hochfrequenzeinrichtung (HF),
- eine Prozessoreinrichtung (PE) und
- eine Bedieneinrichtung (MMI) umfassen,
- wobei das Gehäuse (G) einen Musikspeicher (M_SPE) enthält,
- wobei zur Wiedergabe der Musik zumindest eine Komponente zur Durchführung der drahtlosen Kommunikation verwendet wird, und
- wobei die Prozessoreinrichtung (PE) derart eingerichtet ist, daß
- die Bedieneinrichtung (MMI) in einem Musikwiedergabemodus oder in einem Kommunikationsmodus betreibbar ist,
- daß die Bedieneinrichtung (MMI) automatisch vom Musikwiedergabemodus in den Kommunikationsmodus geschaltet wird, wenn während einer Musikwiedergabe ein Ruf eingeht, und
- daß einer Taste im Musikwiedergabemodus ein anderer Steuerbefehl zugeordnet ist als im Kommunikationsmodus.

2. Funkgerät (FG) nach Anspruch 1,
- bei dem die Prozessoreinrichtung (PE) einen Digitalen Signalprozessor (DSP) umfaßt, und zur Wiedergabe der Musik der Digitale Signalprozessor (DSP) verwendet wird.

3. Funkgerät (FG) nach einem der vorhergehenden Ansprüche,
- bei dem die Komponenten zur Durchführung der drahtlosen Kommunikation zumindest einen Digital/Analogwandler (DA) umfaßt und zur Wiedergabe der Musik der Digital/Analogwandler (DA) verwendet wird.

4. Funkgerät (FG) nach einem der vorhergehenden Ansprüche,
- bei dem die Komponenten zur Durchführung der drahtlosen Kommunikation einen Audioverstärker (V) umfassen und zur Wiedergabe der Musik der Audioverstärker (V) verwendet wird.

5. Funkgerät (FG) nach einem der vorhergehenden Ansprüche,
- bei dem die Komponenten zur Durchführung der drahtlosen Kommunikation einen Ausgang (OUT) für eine externe Audiowiedergabeeinrichtung umfassen und zur Wiedergabe der Musik der Ausgang (OUT) für eine externe Audiowiedergabeeinrichtung verwendet wird.

6. Funkgerät (FG) nach einem der vorhergehenden Ansprüche,
- bei dem die Prozessoreinrichtung (PE) derart eingerichtet ist, daß
- die Wiedergabe der Musik automatisch gestoppt wird, wenn die in einem Energiespeicher (A) der Stromversorgungseinrichtung (SVE) gespeicherte Energie unter einen Schwellwert fällt.

7. Funkgerät (FG) nach einem der vorhergehenden Ansprüche,
- bei dem die Prozessoreinrichtung (PE) derart eingerichtet ist, daß
- das Funkgerät (FG) im Musikwiedergabemodus und im Kommunikationsmodus über eine Fernbedieneinheit (RC) bedienbar ist.

8. Funkgerät (FG) nach Anspruch 7,
- bei dem die Prozessoreinrichtung (PE) derart eingerichtet ist, daß
- die Fernbedieneinheit (RC) in einem Musikwiedergabemodus oder in einem Kommunikationsmodus betreibbar ist.

9. Funkgerät (FG) nach einem der vorhergehenden Ansprüche, bei dem die Musik im MP3-Format komprimiert gespeichert ist.

10. Funkgerät (FG) nach einem der vorhergehenden Ansprüche, bei dem der Musikspeicher (M_SPE) eine auswechselbare Speicherkarte umfaßt.

11. Funkgerät (FG) nach einem der vorhergehenden Ansprüche, mit einer Schnittstelle (SS) zum Laden von Musikdaten.

12. Funkgerät (FG) nach einem der vorliergehen den Ansprüche,
- bei dem die Prozessoreinrichtung (PE) derart eingerichtet ist, daß zur Signalisierung eines eingehenden Rufes durch einen Rufton die Wiedergabe der Musik unterbrochen wird oder mit verringerter Lautstärke erfolgt.

13. Funkgerät (FG) nach einem der vorhergehenden Ansprüche,
- bei dem die Prozessoreinrichtung (PE) derart eingerichtet ist, daß ,
- zur Signalisierung eines eingehenden Rufes am Ausgang (OUT) für eine externe Audiowiedergabeeinrichtung (WG) Informationen über die Identität des rufenden Teilnehmers durch synthetisierte Sprachsignale ausgegeben werden.

## Claims

1. Radio device (FG) for wireless communication
- having a housing (G) containing components for implementing wireless communication, wherein said components include
- a power supply device (SVE),
- a high-frequency device (HF),
- a processor device (PE) and
- an operating device (MMI),
- wherein the housing (G) contains a music memory (M_SPE),
- wherein for playing music at least one component is used for implementing wireless communication and
- wherein the processor device (PE) is set up in such a way that
- the operating device (MMI) can be operated in a music playing mode or in a communication mode,
- the operating device (MMI) will be switched automatically from a music playing mode to a communication mode when a call arrives while music is being played and
- that in the music playing mode a key is assigned a control instruction different from that in the communication mode.

2. Radio device (FG) according to claim 1,
- in which the processor device (PE) includes a digital signal processor (DSP) and said digital signal processor (DSP) is used for playing music.

3. Radio device (FG) according to one of the preceding claims,
- in which the components for implementing wireless communication include at least one digital-to-analogue converter (DA) and said digital-to-analogue converter (DA) is used for playing music.

4. Radio device (FG) according to one of the preceding claims,
- in which the components for implementing wireless communication include an audio amplifier (V) and said audio amplifier (V) is used for playing music.

5. Radio device (FG) according to one of the preceding claims
- in which the components for implementing wireless communication include an output (OUT) for an external audio reproduction device and said output (OUT) for an external audio reproduction device is used for playing music.

6. Radio device (FG) according to one of the preceding claims,
- in which the processor device (PE) is set up in such a way that
- music playing will be stopped automatically if the energy stored in an energy store (A) of the power supply device (SVE) falls below a threshold value.

7. Radio device (FG) according to one of the preceding claims,
- in which the processor device (PE) is set up in such a way that
- the radio device (FG) can be controlled in the music playing mode and in the communication mode via a remote control unit (RC).

8. Radio device (FG) according to claim 7,
- in which the processor device (PE) is set up in such a way that
- the remote control unit (RC) can be operated in a music playing mode or in a communication mode.

9. Radio device (FG) according to one of the preceding claims, in which music is stored compressed in MP3 format.

10. Radio device (FG) according to one of the preceding claims, in which the music memory (M_SPE) includes a replaceable memory card.

11. Radio device (FG) according to one of the preceding claims, having an interface (SS) for loading music data.

12. Radio device (FG) according to one of the preceding claims,
- in which the processor device (PE) is set up in such a way that for the signalling of an incoming call by means of a ringing tone the playing of music will be interrupted or will take place at a reduced volume.

13. Radio device (FG) according to one of the preceding claims,
- in which the processor device (PE) is set up in such a way that
- for signalling an incoming call at the output (OUT) for an external audio reproduction device (WG), information about the calling subscriber's identity is fed out by means of synthesised voice signals.

## Revendications

1. Appareil radio (FG) pour la communication sans fil,
- équipé d'un boîtier (G) comprenant des composants pour la réalisation de la communication sans fil, les composants comprenant
- un dispositif d'alimentation en courant (SVE)
- un dispositif à haute fréquence (HF)
- un dispositif processeur (PE) et
- un dispositif de commande (MMI)
- le boîtier (G) contenant une mémoire de musique (M_SPE),
- au moins un composant étant utilisé afin de restituer la musique pour la réalisation de la communication sans fil, et
- le dispositif processeur (PE) étant configuré de telle manière que
- le dispositif de commande (MMI) peut fonctionner dans un mode de restitution de musique ou dans un mode de communication,
- que le dispositif de commande (MMI) est commuté automatiquement du mode de restitution de musique en mode de communication lorsqu'un appel arrive pendant une restitution de musique et
- qu'en mode de restitution de musique, une autre instruction de commande qu'en mode de communication est affectée à une touche.

2. Appareil radio (FG) selon la revendication 1,
- dans lequel le dispositif processeur (PE) comprend un processeur de signaux numérique (DSP) et dans lequel le processeur de signaux numérique (DSP) est utilisé pour restituer la musique.

3. Appareil radio (FG) selon l'une quelconque des revendications précédentes,
- dans lequel les composants pour la réalisation de la communication sans fil comprennent au moins un convertisseur analogique-numérique (DA) et dans lequel le convertisseur analogique-numérique (DA) est utilisé pour restituer la musique.

4. Appareil radio (FG) selon l'une quelconque des revendications précédentes,
- dans lequel les composants pour la réalisation de la communication sans fil comprennent un amplificateur audio (V) et dans lequel l'amplificateur audio (V) est utilisé pour restituer la musique.

5. Appareil radio (FG) selon l'une quelconque des revendications précédentes,
- dans lequel les composants pour la réalisation de la communication sans fil comprennent une sortie (OUT) pour un dispositif externe de restitution audio et dans lequel la sortie (OUT) est utilisée pour un dispositif de restitution audio afin de restituer la musique.

6. Appareil radio (FG) selon l'une quelconque des revendications précédentes,
- dans lequel le dispositif processeur (PE) est configuré de telle manière que
- la restitution de la musique est arrêtée automatiquement lorsque l'énergie stockée dans un accumulateur d'énergie (A) du dispositif d'alimentation en courant (SVE) passe en dessous d'une valeur de seuil.

7. Appareil radio (FG) selon l'une quelconque des revendications précédentes,
- dans lequel le dispositif processeur (PE) est configuré de telle manière que
- l'appareil radio (FG) peut être commandé en mode de restitution de musique et en mode de communication par l'intermédiaire d'une unité de télécommande (RC).

8. Appareil radio (FG) selon la revendication 7,
- dans lequel le dispositif processeur (PE) est configuré de telle manière que
- l'unité de télécommande (RC) peut être commandée dans un mode de restitution de musique ou dans un mode de communication.

9. Appareil radio (FG) selon l'une quelconque des revendications précédentes,
- dans lequel la musique est mémorisée en étant comprimée en format MP3.

10. Appareil radio (FG) selon l'une quelconque des revendications précédentes,
- dans lequel la mémoire de musique (M_SPE) comprend une carte mémoire interchangeable.

11. Appareil radio (FG) selon l'une quelconque des revendications précédentes,
comprenant une interface (SS) pour télécharger des données musicales.

12. Appareil radio (FG) selon l'une quelconque des revendications précédentes,
- dans lequel le dispositif processeur (PE) est configuré de telle manière que
- pour la signalisation d'un appel entrant au moyen d'une tonalité, la restitution de la musique est interrompue ou est réalisée avec une intensité sonore diminuée.

13. Appareil radio (FG) selon l'une quelconque des revendications précédentes,
- dans lequel le dispositif processeur (PE) est configuré de telle manière que
- pour la signalisation sur la sortie (OUT) d'un appel entrant pour un dispositif externe de restitution audio (WG), des informations concernant l'identité de l'abonné appelant sont sorties au moyen de signaux vocaux synthétisés.
